# EUROPÄISCHE PATENTSCHRIFT

(11) **EP 0 611 911 B1**
(45) Veröffentlichungstag und Bekanntmachung des Hinweises auf die Patenterteilung: **02.11.1995**
(21) Anmeldenummer: 94100642.1
(22) Anmeldetag: 18.01.1994
(51) Int. Cl.: F16L 47/00, F16L 33/207

(54) **Abdichtende Verbindung von Kunststoff-Metall-Kunststoff-Verbundrohren**
Sealing connection of plastic-metal-plastic composite tubes
Raccord étanche des tuyaux composites en matière plastique-métal-plastique

(30) Priorität: 16.02.1993 DE 4304680
(43) Veröffentlichungstag der Anmeldung: 24.08.1994
(73) Patentinhaber: FRÄNKISCHE ROHRWERKE, GEBR. KIRCHNER GmbH & Co., D-97486 Königsberg (DE)
(72) Erfinder: Kleinheinz, Michael, D-97772 Wildflecken (DE); Frey, Jürgen, D-97475 Zeil (DE); Jäggi, Georg, CH-4702 Oensingen (CH)
(74) Vertreter: Schwabe - Sandmair - Marx

(56) Entgegenhaltungen:
- WO-A-92/09840
- CH-A- 383 707
- US-A- 2 250 286
- US-A- 3 549 180

## Beschreibung

Die Erfindung betrifft eine abdichtende Verbindung von Kunststoff-Metall-Kunststoff-Verbundrohren gemäß dem Oberbegriff des Anspruchs 1, wie diese beispielsweise aus der US-A-3,549,180 bekannt ist.

Als Verbindung zwischen Kunststoff-Metall-Kunststoff-Verbundrohren und dem Anschlußteil eines Fittings oder einer Armatur sind mehrere Preßverbindungen bekannt, die das Verbundrohr direkt auf dem Anschlußteil oder zusammen mit einer Preßstützhülse durch entsprechende Preßwerkzeuge radial verpressen.

Bekannte Preßverbindungen für Kunststoff-Metall-Kunststoff-Verbundrohre ohne Preßstützhülse verpressen das auf ein Anschlußteil eines Fittings oder einer Armatur aufgeschobene Verbundrohr direkt, wodurch nicht selten aufgrund des Einwirkens des Preßwerkzeugs die äußere Kunststoffschicht des Verbundrohres verletzt wird. Bei solchen Preßverbindungen muß ferner die Metalleinlage des Verbundrohres stärker als für ausreichende Festigkeit zwischen Befestigungs-Fixpunkten (Rohrschellen) ausgebildet sein, nämlich so stark, daß nach dem Verpressen des auf dem Anschlußstück des Fittings sitzenden Abschnitts des Kunststoff-Metall-Kunststoff-Verbundrohres eine hinreichende gute Verbindung zwischen beiden hergestellt werden kann.

Nachteilig bei diesen bekannten Verbindungen ist insbesondere auch die Tatsache, daß diese nicht ausreichend dauerfest und stoßartigen Belastungen gewachsen sind und die Anschlußstücke spannungsfrei zu verpressen sind.

Hinzukommt insoweit, daß der Kontakt zwischen der Metalleinlage des Verbundrohrs und eines Anschlags des Anschlußteils, um beispielsweise Korrosion zwischen beiden Teilen zu vermeiden, nur durch eine separate PE-Kunststoffscheibe verhindert werden kann, welche auf das Anschlußteil des Fittings aufgeschoben werden muß und die aufgrund ihrer Dimension schwer greifbar ist und nicht selten bei der Montage vergessen wird.

Um hinreichend dichte Verbindungen zu erzielen, sind insbesondere auch aufwendige eigene Kunststoffhülsen als Transportsicherung für die sensiblen Anschlußteile des Fittings oder der Armatur notwendig, die nach dem Herstellen der Verbindung übrig bleiben und entweder selbst entsorgt oder aufgrund der Rücknahmeverpflichtung für Kunststofftransportsicherungen wieder zum Herstellerwerk zurücktransportiert werden müssen.

Im Gegensatz zu solchen Preßverbindungen wird bei bekannten Preßverbindungen mit Klemmring oder Preßstützhülse ein(e) auf das Verbundrohr aufgebrachte(r) Klemmring oder Preßstützhülse zusammen mit dem Verbundrohr auf dem Anschlußteil teil verpreßt. Dadurch wird zwar einer Verletzung der äußeren Kunststoffschicht des Verbundrohrs durch das Preßwerkzeug wirksam begegnet und die mechanische Festigkeit der Verbindung erhöht, die oben genannten Probleme hinsichtlich der Handhabung der PE-Kunststoffscheibe und der zusätzlichen Kunststoffhülsen für eine Transportsicherung der Anschlußteile bleiben aber ungelöst.

Weiterhin ist bei diesen bekannten Verbindungen die Position/Lage der auf das Verbundrohr aufgeschobenen Klemmringe nicht genügend genau definiert und reproduzierbar.

Aus der gattungsgemäßen US-A-3,549,180 ist eine Rohrverbindung bekannt, bei der ein Kunststoffteil in einem Bereich zwischen einer Preßhülse und einem Anschlag einer Rohrverbindung sowie einem Rohr zum Einsatz gelangt. Das Kunststoffteil ist jedoch nicht dazu ausgebildet, um dann, wenn die Preßhülse nicht an der bekannten Verbindung angeordnet ist, an der Preßhülse zu halten. Darüber hinaus kann die unverpeßte Preßhülse nicht dazu verwendet werden, um auf den Anschlußbereich der bekannten Verbindung aufgeschoben zu werden, um den Anschlußbereich zu schützen, solange die bekannte Verbindung nicht zum Einsatz kommen soll. Eventuelle Schutzkappen für den Verbindungsbereich fallen hier später als zu entsorgender Abfall an.

Weitere Verbindungen für Rohre bzw. Verbundrohre sind aus der US-A-2,250,286, der CH-A-383 707 und der WO-A-92/09840 bekannt, wobei auch hier prinzipiell vergleichbare Schwierigkeiten und Nachteile auftreten, wie sie bei der gemäß der gattungsgemäßen Druckschrift ausgebildeten Verbindung auftreten.

Ausgehend von diesem Stand der Technik liegt der Erfindung die Aufgabe zugrunde, mindestens einen der vorgenannten Nachteile auszuräumen und eine abdichtende Verbindung zu schaffen, die sowohl ausreichend dauerfest und stoßartigen Belastungen gewachsen ist als auch den Kontakt zwischen der Metallschicht des Verbundrohrs und des Anschlußteils ohne Erhöhung des Arbeitsaufwandes bei der Montage verhindert. Insbesondere soll dies unter Vermeidung von zusätzlichen Kunststoffhülsen für die Transportsicherung für den Anschlußteil eines Fittings oder einer Armatur ermöglicht werden.

Diese Aufgabe wird durch die Merkmale des Anspruchs 1 gelöst.

Die gemäß der vorliegenden Erfindung zu erzielenden Vorteile beruhen darauf, daß das Kunststoffteil am zylindrischen Bereich der Preßhülse form- und/oder kraft- und/oder stoffschlüssig behalten ist, die Preßhülse aufschiebbar ist, im Falle eines Kraftschlußes so, daß der Kraftschluß zwischen Kunststoffteil und Preßhülse durch Preßsitz eines zylindrischen Teils des Kunststoffteiles am Außenumfang oder am Innenumfang der Preßhülse erreicht wird, und die Stirnseite des Kunststoffteils bei auf das Anschlußteil und Verbundrohr aufgeschobener Preßhülse radial soweit einwärts ragt, daß es im nicht verpreßten Zustand die Preßhülse am zylindrischen Anschlußteil zu halten vermag.

Gemäß einer bevorzugten Ausgestaltung der Erfindung ist der Preßhülsen-Kunststoffteil-Verbund als Transportsicherung für das Anschlußteil verwendbar.

Das Verpressen des Preflhülsen-Kunststoffteil-Verbundes zusammen mit dem Verbundrohr auf dem Anschlußteil erfolgt, wie bei den bisher bekannten Preßverbindungen auch, vorzugsweise über ein geeignetes Preßwerkzeug.

Der Verbund zwischen Preßhülse und Kunststoffteil ist bevorzugt am zylindrischen Teil der Preßhülse im Bereich einer ihrer Stirnseiten form- und/oder kraft- und/oder stoffschlüssig realisiert, beispielsweise formschlüssig, durch einen Bund an einem und eine Nut am jeweils anderen der beiden Teile oder bei entsprechender Gewindeausbildung an der Preßhülse und dem Kunststoffteil durch Aufschrauben, beispielsweise kraftschlüssig durch Aufpressen des Kunststoffteiles auf die Preßhülse unter elastischer Wertung der Kunststoffhülse oder beispielsweise stoffschlüssig durch eine Klebverbindung zischen Kunststoffteil und Preßhülse.

Bei der Montage wird der Preßhülsen-Kunststoffteil-Verbund mit dem Kunststoffteil am nacheilenden Ende der Preßhülse sitzend auf das Kunststoff-Metall-Kunststoff-Verbundrohr und letzteres auf das Anschlußteil aufgeschoben. Das Kunststoffteil deckt bzw. dichtet dabei die Stirnfläche des Verbundrohres ab und verhindert damit den Kontakt der Metallschicht des Verbundrohres mit Teilen des Anschlußteils, beispielsweise mit einem umlaufenden axialen Anschlag des Anschlußteils.

Galvanische Elemente zwischen dem aus entzinkungsbeständigem Messing oder Rotguß gefertigten Anschlußteil und der meist aus Aluminium bestehenden Einlage des Kunststoff-Metall-Kunststoff-Verbundrohres werden dadurch vermieden und die Verbindung zwischen diesen beiden unterschiedlichen Materialien vor Korrosion geschützt.

Zur Herstellung der festen und verdrehsicheren Verbindung zwischen Anschlußteil und Verbundrohr wird die Preßhülse anschließend zusammen mit dem Verbundrohr auf dem Anschlußteil radial verpreßt.

Der Vorteil gegenüber der bekannten Preßverbindung ohne Preßhülse ergibt sich insbesondere aus der Tatsache, daß die Metallschicht des Verbundrohrs dünner ausgebildet werden kann, was erhebliche Materialersparnis mit sich bringt, da sie nicht stärker als für ausreichende Festigkeit zwischen Befestigungs-Fixpunkten ausgebildet werden muß, um den Anforderungen hinsichtlich einer hinreichend guten Verbindung beim Verpressen zu genügen. Zudem wird durch den Preßhülsen-Kunststoffteil-Verbund die PE-Kunststoffscheibe überflüssig und eine dauerbelastungsbeständige und sichere Verbindung gewährleistet.

Gemäß einer bevorzugten Ausgestaltung der Erfindung ragt die Stirnseite des Kunststoffteils radial so weit einwärts, daß bei der Montage und vor dem Verpressen die Preßhülse, und vorzugsweise auch das Verbundrohr am Anschlußteil gehaltert wird. Dadurch wird bei den Installationsarbeiten nicht nur schon vor dem Verpressen ein genaues Fixieren, Ausrichten und Positionieren der zu verbindenden Teile erreicht, sondern auch der Preßvorgang erleichtert.

Bei geeigneter Wahl des Materials des Kunststoffteils, wie beispielsweise Elastomer-Material, kann zusätzlich eine vollständige Abdichtung der Metalleinlage des Verbundrohres gegenüber dem Anschlußteil beim axialen Aufpressen gewährleistet werden.

Gemäß einer weiteren bevorzugten Ausgestaltung der Erfindung kann es auch vorteilhaft sein, für den Preßhülsen-Kunststoffteil-Verbund nicht nur die Funktion einer Sicherung einer festen Verbindung des Verbundrohres mit dem Anschlußteil und der Kontaktverhinderung zwischen der Metalleinlage des Verbundrohrs und des Anschlußteils vorzusehen, sondern auch die einer Transportsicherung für das Anschlußteil.

Bei dieser Ausgestaltung ragt die Stirnseite des Kunststoffteils idealiter radial soweit einwärts vor, daß einerseits das Kunststoffteil, wie oben beschrieben, die Preßhülse zusammen mit dem Verbundrohr vor dem Verpressen am Anschlußteil haltert und andererseits, wenn es mit der Preßhülse verbunden ist und der Preßhülsen-Kunststoffteil-Verbund mit dem Kunststoffteil am nacheilenden Ende der Preßhülse sitzend auf das Anschlußteil aufgeschoben wird, form- und kraftschlüssig mit dem Anschlußteil in Verbindung steht, so daß die Preßhülse dort als Transportsicherung sicher gehalten wird.

Die axiale Länge der Preßhülse ist dabei so gewählt, daß die Preßhülse den sensiblen Teil des Anschlußteils, beispielsweise im Bereich eines Dichtungsrings, überdeckt und schützt.

Bei der Montage auf der Baustelle kann der Installateur also den Preßhülsen-Kunststoffteil-Verbund vom Anschlußstück des Fittings oder einer Armatur, auf dem er als Transportsicherung sitzt, abziehen und verkehrt herum auf das Kunststoff-Metall-Kunststoff-Verbundrohr aufschieben und danach das Verbundrohr auf den Anschlußbereich des Fittings unter der Preßhülse aufbringen.

Mit der erfindungsgemäßen Verbindung ist es somit möglich, sowohl eine dauerhafte zuverlässig dichte und mechanisch feste Verbindung zu schaffen als auch den Kontakt zwischen der Metalleinlage des Verbundrohres und des Anschlußteils ohne additive PE-Kunststoffscheibe zu verhindern und zusätzlich mit dem Preßhülsen-Kunststoffteil-Verbund eine Transportsicherung für das Anschlußteil zu realisieren, wobei die Verbindung und der Verbund einfach und kostengünstig zu verwirklichen ist.

Der Gegenstand der Erfindung wird anhand der beigefügten schematischen Zeichnung beispielsweise noch näher erläutert. In dieser ist:
- Fig. 1a: der Längsschnitt durch ein Ausführungsbeispiel eines erfindungsgemäßen Kunststoffteils,
- Fig. 1b: der Längsschnitt durch ein Ausführungsbeispiel einer erfindungsgemäßen Preßhülse,
- Fig. 2: der Längsschnitt durch einen Preßhülsen-Kunststoffteil-Verbund,
- Fig. 3: der Längsschnitt durch ein Ausführungsbeispiel der erfindungsgemäßen Verbindung vor dem Verpressen,
- Fig. 4: der Längsschnitt gemäß Fig. 3 nach dem Verpressen, und
- Fig. 5: der Längsschnitt durch das Anschlußteil mit aufgeschobenen Preßhülsen-Kunststoffteil-Verbund als Transportsicherung.

Gleiche Bezugszeichen bezeichnen in den Figuren durchgehend gleiche oder ähnliche Elemente bzw. Bauteile.

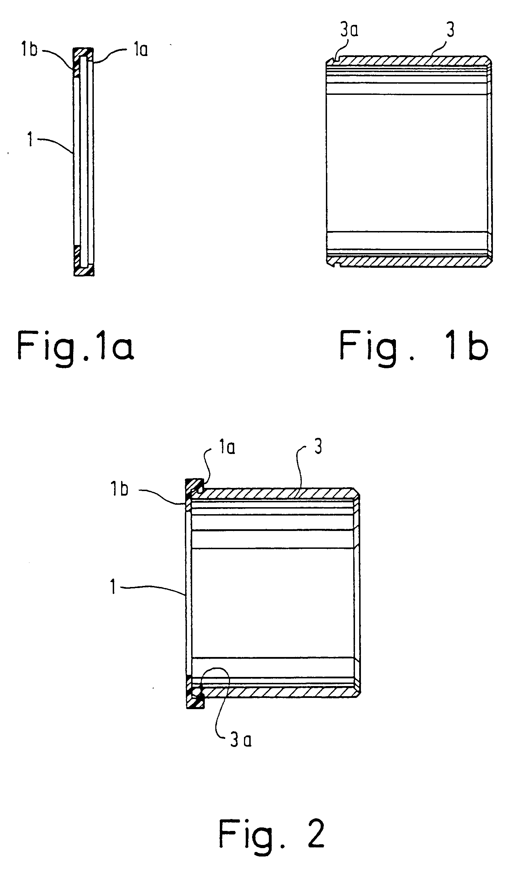

In Fig. 1a ist ein Kunststoffteil 1 im Längsschnitt gezeigt und weist beispielsweise einen Bund 1a und eine Stirnseite 1b auf, die radial einwärts ragt.

Das Kunststoffteil 1 besteht vorzugsweise aus PE-Material - es sind jedoch auch andere Materialien möglich, etwa Elastomermaterial oder Zweischichtenaufbaue mit Elastomermaterial.

Um das Kunststoffteil 1 (Fig. 1a) mit der Preßhülse 3 (Fig. 1b) form- und/oder kraftschlüssig zu verbinden, wird das Kunststoffteil auf die Preßhülse aufgeschoben, wodurch der Bund 1a in beispielsweise eine Nut 3a an der Preßhülse eingreift (Fig. 2).

Die Nut 3a und der Bund 1a entsprechen ihrer Funktion nach Haltevorrichtungen und können sowohl am Außen- bzw. Innenumfang der Preßhülse bzw. des Kunststoffteils angeordnet sein.

Zwecks hoher Haltekraft kann das Kunststoffteil 1 beispielsweise auch sowohl einen Bund, der in eine entsprechende Aufnahme am Außenumfang der Preßhülse als auch einen Bund aufweisen, der in eine entsprechende Aufnahme am Innenumfang der Preßhülse eingreift. Es sind jedoch auch andere form- und kraftschlüssige Verbindungen möglich.

Die Preßhülse 3 besteht vorzugsweise aus Metall, dessen Quetschgrenze (siehe z.B. Lueger, Lexikon der Technik, 4. Auflage, Bd. 1, S. 393) kleiner ist als diejenige des Anschlußteils 5, wobei die Preßhülse 3 auch aufgrund ihrer wesentlich geringeren Wandstärke als derjenigen des Anschlußteils leicht verformbar ist, dergestalt, daß es ohne merkliche Verformung des Anschlußteils in der Lage ist, eine dauerhafte Preßverbindung des Verbundrohres 7 mit dem Anschlußteil 5 sicherzustellen. Beispielsweise ist Preßhülsenmaterial aus Messing besonders vorteilhaft.

Die Stirnseite 1b des Kunststoffteils 1 ragt vorzugsweise radial einwärts so weit vor, daß das Kunststoffteil bei auf das Anschlußteil aufgeschobenem Preßhülsen-Kunststoffteil-Verbund die Preßhülse am Anschlußteil zu halten vermag.

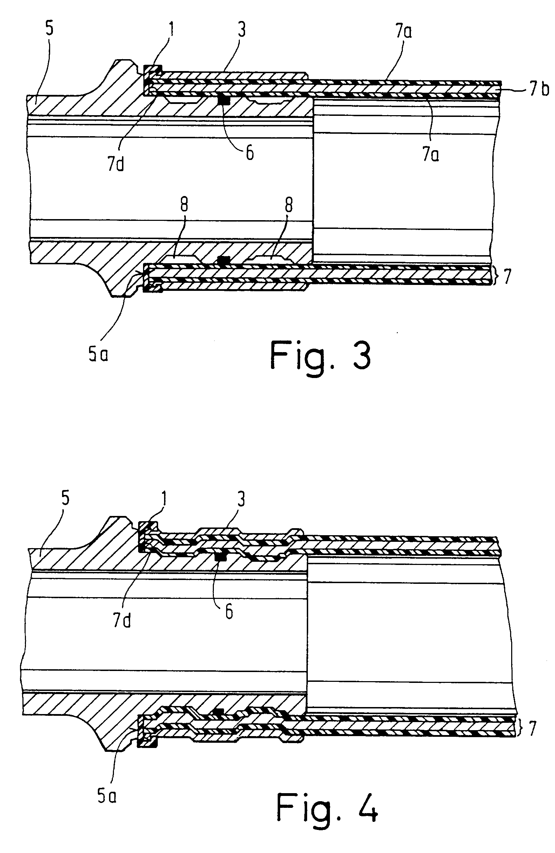

Um das Kunststoff 7a-Metall 7b-Kunststoff 7a-Verbundrohr 7 mit dem Anschlußteil 5 zu verbinden, wird das Verbundrohr 7 beispielsweise bis zu einem Anschlag 5a auf das Anschlußteil 5 aufgeschoben. Die radial einwärts ragende Stirnseite 1b des Kunststoffteils des vorher auf das Verbundrohr 7 aufgebrachten Preßhülsen-Kunststoffteil-Verbundes verhindert dabei einen direkten Kontakt der Stirnfläche 7d des Verbundrohres 7 mit dem Anschlag 5a. Weiterhin wird die Preßhülse am Anschlußteil 5 sicher gehalten (Fig. 3).

Mit einem hier nicht näher gezeigten Preßwerkzeug wird anschließend die Preßhülse zusammen mit dem Verbundrohr gegen das Anschlußteil radial verpreßt, wodurch eine form- und kraftschlüssige und nicht lösbare Verbindung geschaffen wird.

Wegen der gegenüber dem Anschlußteil 5 kleineren Quetschgrenze der Preßhülse und des Verbundrohres sowie wegen der leichten Verformbarkeit der Preßhülse 3 infolge ihrer geringen Wandstärke gegenüber derjenigen des Verbundrohrs 7 gegenüber dem Anschlußteil 5 läßt sich auch ohne Dichtring 6 eine dichte Verbindung zwischen Verbundrohr 7 und Anschlußteil 5 entstehen, da das Verbundrohr mit der Preßhülse stärker als das Anschlußteil 5 plastisch verformt wird.

Mit einem Dichtring 6 (O-Ring) läßt sich die Dichtwirkung namentlich bei hohen Leitungsdrücken sicherstellen.

Bei der Ausführung nach Fig. 4 wird beispielsweise eine Verbindung gezeigt, die in einem Bereich vor und nach dem Dichtring 6 mit einem entsprechenden Werkzeug radial so verpreßt wurde, daß in der Preßhülse und dem Verbundrohr jeweils Vertiefungen entstehen, welche entsprechenden Furchen bzw. Vertiefungen 8 am Anschlußteil entsprechen, womit ein besonders fester Halt des Verbundrohres auf dem Anschlußteil erreicht wird.

Bei bekannten Anschlußteilen von Fittings und Armaturen weisen die Vertiefungen 8 Querrillen auf oder sind achtkantig und bei größeren Abmessungen z.B. auch zwölfkantig ausgeführt, wodurch insbesondere auch eine zusätzliche Erhöhung der Verdrehsicherheit nach dem Verpressen erzielt wird.

Als Folge der Kontaktverhinderung zwischen der Stirnfläche 7d des Verbundrohres 7 und des Anschlages 5a werden insbesondere Korrosionserscheinungen durch die Bildung eines galvanischen Elementes zwischen dem Anschlußteil 5 und der Metalleinlage 7b (üblicherweise Aluminium) des Verbundrohres 7 vermieden.

Durch die Preßhülse erreicht man nicht nur, daß die Metalleinlage 7b des Verbundrohres nur mehr Restriktionen hinsichtlich der Statik bei der Installation unterworfen ist, nicht mehr jedoch Erfordernissen hinsichtlich seiner Eignung für eine dauerhafte plastische Verpressung genügen muß, sondern gleichzeitig noch eine Erhöhung der mechanischen Dauerbelastbarkeit.

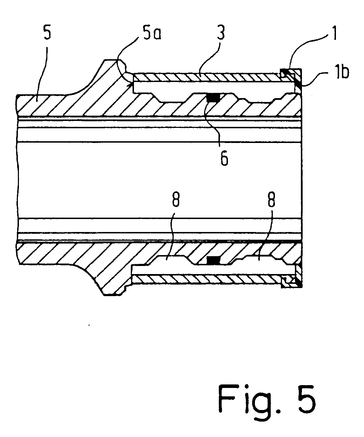

Fig. 5 zeigt nun eine Anwendung eines erfindungsgemäßen Preßhülsen-Kunststoffteil-Verbundes als Transportsicherung.

Der Preßhülsen-Kunststoffteil-Verbund wird dazu mit dem Kunststoffteil 1 am nacheilenden Ende der Preßhülse 3 sitzend auf das Anschlußteil 5 aufgeschoben.

Die radial einwärts ragende Stirnseite 1b des Kunststoffteils 1 steht dabei form- und kraftschlüssig mit dem zylindrischen Anschlußteil 5 in Verbindung, so daß die Preßhülse 3 dort sicher gehalten wird.

Die Preßhülse 3 dient in dieser Anwendung als Schutz für die sensiblen Bereiche vor und nach dem Dichtring 6 und überdeckt diese.

Insbesondere ist es vorteilhaft, bei entsprechender axialer Länge der Preßhülse 3, diese bis zum Anschlag 5a auf das Anschlußteil 5 aufzuschieben, da sie dadurch eine zusätzliche Abstützung und Stabilisierung am Anschlag 5a erfährt. Es kann damit praktisch erreicht werden, daß der erfindungsgemäße Preßhülsen-Kunststoffteil-Verbund in der Funktion als Transportsicherung auch den rauhesten Anforderungen genügt.

Um auch Verschmutzungen im Inneren des Anschlußteils 5 beim Transport zu verhindern, ist es ferner vorteilhaft, die Stirnseite 1b des Kunststoffteils mit einem Häutchen zu versehen, welches die Stirnfläche des Anschlußteils 5 abdeckt und verschließt.

Vorzugsweise weist dieses Häutchen eine etwa kreisförmige Perforationslinie auf, entlang welcher das Häutchen beim Aufschieben des Preßhülsen-Kunststoffteil-Verbunds auf das Anschlußteil 5 zum Herstellen der erfindungsgemäßen Verbindung aufplatzt.

## Patentansprüche

1. Abdichtende Verbindung von Kunststoff-Metall-Kunststoff-Verbundrohren (7) mit einem zylindrischen Anschlußteil (5) aus Metall, insbesondere aus entzinkungsbeständigem Messing oder Rotguß, mit dem das auf es aufgeschobene Verbundrohr (7) durch Verformung unter Preßdruck verbindbar ist, wobei das Anschlußteil (5) einen umlaufenden, axialen Anschlag (5a) für die Stirnfläche (7d) des Verbundrohres (7) aufweist, wobei eine im wesentlichen zylindrische Preßhülse (3) vorgesehen ist, die im Bereich einer ihrer Stirnseiten mit einem Kunststoffteil (1) versehen ist, das radial einwärts ragt, wobei die Preßhülse (3) mit dem Kunststoffteil (1) zum umlaufenden axialen Anschlag (5a) des Anschlußteils (5) gerichtet auf das Verbundrohr (7) derart angeordnet ist, daß ein direkter Kontakt der Stirnfläche (7d) des Verbundrohres (7) mit dem Anschlag (5a) verhinderbar ist, und die Preßhülse (3) zusammen mit dem Verbundrohr (7) auf dem Anschlußteil (5) zur Herstellung einer festen und verdrehsicheren Verbindung zwischen Anschlußteil (5) und Verbundrohr (7) verpreßbar ist, mit folgenden Merkmalen :
a) das Kunststoffteil (1) ist am zylindrischen Bereich der Preßhülse (3) form- und/oder kraft- und/oder stoffschlüssig gehalten,
b) die Preßhülse (3) ist aufschiebbar,
c) im Falle eines Kraftschlußes so, daß der Kraftschluß zwischen Kunststoffteil (1) und Preßhülse (3) durch Preßsitz eines zylindrischen Teils des Kunststoffteiles am Außenumfang oder am Innenumfang der Preßhülse (3) erreicht wird,
d) die Stirnseite (1b) des Kunststoffteils (1) bei auf das Anschlußteil (5) und Verbundrohr (7) aufgeschobener Preßhülse (3) radial soweit einwärts ragt, daß es im nicht verpreßten Zustand die Preßhülse (3) am zylindrischen Anschlußteil (5) zu halten vermag.

2. Verbindung nach Anspruch 1, dadurch **gekennzeichnet**, daß der Formschluß zwischen Kunststoffteil (1) und Preßhülse (3) durch einen Bund (1a) an dem zylindrischen Teil und eine Nut (3a) an der Preßhülse (13) bewerkstelligt ist.

3. Verbindung nach Anspruch 2, dadurch **gekennzeichnet**, daß der Bund (1a) und die Nut (3a) umlaufend ausgeführt sind.

4. Verbindung nach Anspruch 1, dadurch **gekennzeichnet**, daß der Stoffschluß zwischen dem Kunststoffteil (1) und der Preßhülse (3) durch eine Klebeverbindung erreicht wird.

5. Verbindung nach einem der Ansprüche 1 bis 4, dadurch **gekennzeichnet**, daß die Preßhülse (3) aus Messing besteht.

6. Verbindung nach einem der Ansprüche 1 bis 5, dadurch **gekennzeichnet**, daß das Kunststoffteil (1) aus Elastomer-Material oder aus einem Zweischichtenaufbau mit Elastomer-Material ausgebildet ist.

7. Anschlußteil und Preßhülsen-Kunststoffteil-Verbund für die Verbindung nach einem der Ansprüche 1 bis 6, dadurch **gekennzeichnet**, daß im nicht verpreßten Zustand der Verbund mit dem Kunststoffteil (1) am nacheilenden Ende der Preßhülse (3) sitzend auf das Anschlußteil (5) aufgeschoben ist und durch das Kunststoffteil (1) der Verbund form- und/oder kraftschlüssig als Transportsicherung auf dem Anschlußteil (5) fixiert ist.

8. Anschlußteil und Preßhülsen-Kunststoffteil-Verbund nach Anspruch 7, dadurch **gekennzeichnet,** daß das Kunststoffteil (1) mit einem Häutchen an seiner Stirnfläche (1b) versehen ist.

9. Anschlußteil und Preßhülsen-Kunststoffteil-Verbund nach Anspruch 8, dadurch **gekennzeichnet,** daß das Häutchen eine wenigstens etwa kreisförmige Perforationslinie aufweist.

## Claims

1. A sealing connection of plastic-metal-plastic composite tubes (7) comprising a cylindrical connecting part (5) made of metal, especially deplating-resistant brass or red bronze, by means of which the composite tube (7) slipped thereupon is connectable by deformation under compression pressure, said connecting part (5) having a circumferential, axial stopper (5a) for the frontal part (7d) of the composite tube (7), an essentially cylindrical press sleeve (3) being provided which, in the section of one of its frontal parts, is provided with a plastic part (1) which extends inwards radially, said press sleeve (3) comprising the plastic part (1) being orientated in such a way in relation to the circumferential axial stopper (5a) of the connecting part (5) in the direction of the composite tube (7) that direct contact of the frontal part (7d) of the composite tube (7) with the stopper (5a) may be prevented, and the press sleeve (3) may be pressed together with the composite tube (7) on the connecting part (5) with the purpose of creating a fixed and distortion-proof connection between the connecting part (5) and the composite tube (7), comprising the following features:
a) the plastic part (1) is maintained in a form-fit and/or frictional and/or material-closing manner at the cylindrical section of the press-sleeve,
b) the press sleeve (3) may be slipped on,
c) in case of a frictional connection said frictional connection between the plastic part (1) and the press sleeve (3) is achieved by a press fit of a cylindrical part of the plastic part at the outer or inner perimeter of the press sleeve (3),
d) the frontal part (1b) of the plastic part (1) extends radially so far inwards when the press sleeve (3) is slipped on the connecting part (5) and the composite tube (7) that it is capable of keeping the press sleeve (3) on the cylindrical connecting part (5) in a non-pressed state.

2. A connection according to claim 1, characterised in that the form-fit between the plastic part (1) and the press sleeve (3) is achieved by a collar (1a) on the cylindrical part and a groove on the press sleeve (3).

3. A connection according to claim 2, characterised in that the collar (1a) and the groove (3a) are executed in a circumferential manner.

4. A connection according to claim 1, characterised in that the material closure between the plastic part (1) and the press sleeve (3) is achieved by an adhesive connection.

5. A connection according to any of the claims 1 to 4, characterised in that the press sleeve consists of brass.

6. A connection according to one of the claims 1 to 5, characterised in that the plastic part (1) is made of an elastomer material or of a two-layer composition comprising an elastomer material.

7. A connecting part and press sleeve-plastic part composite for the connection according to any of the claims 1 to 6, characterised in that the composite with the plastic part (1) in a non-pressed state is slipped on at the retarded end of the press sleeve (3) while sitting on the connecting part 5 and the composite is fixed in a form-fit and/or frictional connection manner by the plastic part (1) as a transport safeguard on the connecting part (5).

8. A connecting part and press sleeve-plastic part composite according to claim 7, characterised in that the plastic part (1) is provided with a pellicle at its frontal part (1b).

9. A connecting part and press sleeve-plastic part composite according to claim 8, characterised in that the pellicle has an at least approximately circular perforation line.

## Revendications

1. Raccord étanche de tubes composites en matière plastique-métal-plastique (7) composé d'une pièce de raccordement cylindrique (5) en métal, en particulier en laiton ou laiton rouge résistant au dézingage, avec laquelle le tube composite (7) coulissant sur celle-ci peut être assemblé par déformation sous compression, la pièce de raccordement (5) présentant une butée (5a) périphérique axiale pour la face d'about (7d) du tube composite (7), un manchon de compression (3) pour ainsi dire cylindrique étant prévu, pourvu dans la région d'une de ses faces d'about d'une pièce en matière plastique (1) qui s'étend radialement vers l'intérieur, le manchon de compression (3) étant disposé conjointement avec la pièce en matière plastique (1) en direction de la butée périphérique axiale (5a) de la pièce de raccordement (5) dirigée sur le tube composite (7) de sorte qu'un contact direct de la face d'about (7d) du tube composite (7) avec la butée (5a) puisse être évité et le manchon de compression (3) puisse être comprimé entre la pièce de raccordement (5) et le tube composite (7) conjointement avec le tube composite (7) sur la pièce de raccordement (5) pour assurer un raccordement fixe et résistant à la torsion, caractérisé en ce que:
a) la pièce en matière plastique (1) est maintenue dans la région du manchon de compression (3) par clabotage et/ou par friction et/ou par adhérence,
b) le manchon de compression (3) peut coulisser,
c) en cas de connexion par friction, la pièce en matière plastique (1) est solidarisée au manchon de compression (3) par l'ajustage serré d'une pièce cylindrique de la pièce en matière plastique sur le périmètre extérieur ou intérieur du manchon de compression (3);
d) la face d'about (1b) de la pièce en matière plastique (1) s'étend radialement vers l'intérieur, dans le cas où le manchon de compression (3) coulisse sur la pièce de raccordement (5) et le tube composite (7), à un point tel qu'elle peut maintenir le manchon de compression (3) sur la pièce de raccordement cylindrique (5) en l'absence de compression.

2. Raccord selon la revendication 1, caractérisé en ce que le clabotage entre la pièce en matière plastique (1) et le manchon de compression (3) est réalisé par un épaulement (1a) sur la partie cylindrique et une rainure (3a) sur le manchon de compression (13).

3. Raccord selon la revendication 2, caractérisé en ce que l'épaulement (1a) et la rainure (3a) sont périphériques.

4. Raccord selon la revendication 1, caractérisé en ce que la pièce en matière plastique (1) adhère au manchon de compression (3) par un assemblage collé.

5. Raccord selon l'une quelconque des revendications 1 à 4, caractérisé en ce que le manchon de compression (3) se compose de laiton.

6. Raccord selon l'une quelconque des revendications 1 à 5, caractérisé en ce que la pièce en matière plastique (1) est conçue en matière élastomère ou comme une structure à deux couches en matière élastomère.

7. Pièce de raccordement et assemblage manchons de compression-pièce en matière plastique pour l'assemblage selon l'une quelconque des revendications 1 à 6, caractérisée en ce qu'à l'état non comprimé, l'assemblage coulisse conjointement avec la pièce en matière plastique (1) sur l'extrémité en retard du manchon de compression (3) prenant appui sur la pièce de raccordement (5) et en ce que l'assemblage est fixé par clabotage ou friction pour la sécurité du transport sur la pièce de raccordement (5) par le biais de la pièce en matière plastique (1).

8. Pièce de raccordement et assemblage manchons de compression-pièce en matière plastique selon la revendication 7, caractérisée en ce que la pièce en matière plastique (1) est pourvue d'une pellicule sur sa surface d'about (1b).

9. Pièce de raccordement et assemblage manchons de compression-pièce en matière plastique selon la revendication 8, caractérisée en ce que la pellicule présente une ligne de perforation au moins légèrement circulaire.
